(19) Europäisches Patentamt / European Patent Office / Office européen des brevets

(11) **EP 4 332 801 B1**

(12) **EUROPEAN PATENT SPECIFICATION**

(45) Date of publication and mention
of the grant of the patent:
**22.04.2026 Bulletin 2026/17**

(21) Application number: **21945010.3**

(22) Date of filing: **07.06.2021**

(51) International Patent Classification (IPC):
*H04L 9/40* (2022.01)  *H04L 41/142* (2022.01)
*G06F 21/55* (2013.01)  *G06N 20/20* (2019.01)
*G06F 21/56* (2013.01)  *G06N 3/044* (2023.01)
*G06N 3/045* (2023.01)  *G06N 3/08* (2023.01)
*G06N 20/00* (2019.01)

(52) Cooperative Patent Classification (CPC):
**G06F 21/552; G06F 21/566; G06N 3/044;
G06N 3/045; G06N 3/08; G06N 20/00; G06N 20/20;
H04L 41/142; H04L 63/1416; H04L 63/1425**

(86) International application number:
**PCT/JP2021/021623**

(87) International publication number:
**WO 2022/259330 (15.12.2022 Gazette 2022/50)**

(54) **ESTIMATION DEVICE, ESTIMATION METHOD, AND ESTIMATION PROGRAM**

SCHÄTZVORRICHTUNG, SCHÄTZVERFAHREN UND SCHÄTZPROGRAMM

DISPOSITIF D'ESTIMATION, PROCÉDÉ D'ESTIMATION ET PROGRAMME D'ESTIMATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.03.2024 Bulletin 2024/10**

(73) Proprietor: **NTT, Inc.
Tokyo 100-8116 (JP)**

(72) Inventors:
• **YAMADA, Masanori**
Musashino-shi, Tokyo 180-8585 (JP)
• **NAGAI, Tomohiro**
Musashino-shi, Tokyo 180-8585 (JP)
• **TERAMOTO, Yasuhiro**
Musashino-shi, Tokyo 180-8585 (JP)
• **YAMANAKA, Yuki**
Musashino-shi, Tokyo 180-8585 (JP)
• **TAKAHASHI, Tomokatsu**
Musashino-shi, Tokyo 180-8585 (JP)
• **NUKUSHINA, Takahiro**
Musashino-shi, Tokyo 180-8585 (JP)

(74) Representative: **Hoffmann Eitle
Patent- und Rechtsanwälte PartmbB
Arabellastraße 30
81925 München (DE)**

(56) References cited:
WO-A1-2020/234977  CN-A- 112 860 484
JP-A- 2019 004 419  JP-B1- 6 788 929
US-A1- 2021 141 897

• KIM CZANGYEOB ET AL: "Intrusion Detection
Based on Sequential Information Preserving Log
Embedding Methods and Anomaly Detection
Algorithms", IEEE ACCESS, IEEE, USA, vol. 9, 8
April 2021 (2021-04-08), pages 58088 - 58101,
XP011850656, DOI: 10.1109/
ACCESS.2021.3071763
• KIM YOUNG-GYU ET AL: "Anomaly Detection
Using Autoencoder With Feature Vector
Frequency Map", IEEE ACCESS, IEEE, USA, vol.
9, 14 May 2021 (2021-05-14), pages 73808 - 73817,
XP011856711, DOI: 10.1109/
ACCESS.2021.3080330

- YAMANAKA YUUKI, YAMADA MASANORI, TAKAHASHI TOMOKATSU, NAGAI TOMOHIRO: "Utilizing BERT for Feature Extraction of Packet Payload", PROCEEDINGS OF THE ANNUAL CONFERENCE OF JSAI, THE JAPANESE SOCIETY FOR ARTIFICIAL INTELLIGENCE, 11 June 2021 (2021-06-11), pages 1 - 3, XP093015030, Retrieved from the Internet <URL:https://www.jstage.jst.go.jp/article/pjsai/JSAI2021/0/JSAI2021_1F2GS10a04/_pdf/-char/en> [retrieved on 20230118], DOI: 10.11517/pjsai.JSAI2021.0_1F2GS10a04

**Description**

Technical Field

The present invention relates to an estimation device, an estimation method, and an estimation program.

Background Art

In recent years, with the spread of cyber-physical systems (CPS), importance of abnormality detection in the CPS has increased. CPS protocols are diverse, and it is difficult to set abnormality detection rules for the CPS one by one due to cost. Therefore, a method of learning detection rules using machine learning is useful. In particular, an attack on the CPS is at an early stage, and new attacks are expected to appear one after another in the future, and thus, it is important to detect an abnormality based on anomaly using unsupervised learning capable of coping with unknown abnormalities.
Furthermore, since it is difficult to directly incorporate a detector in the CPS, an abnormality detection system using communication data is assumed. Unlike abnormality detection in malfunction countermeasures, it is important to estimate a trend of attack in cyber security because it also affects countermeasures.
At the time of abnormality detection using the communication data of the CPS, an alert indicating an event determined to be abnormal is searched to identify what kind of attack is being performed on the entire system. As a naive method of counting an alert of the same type as a certain alert, there is a method of counting an alert in which discrete amounts of the same protocol, ip, port, and the like match among the alerts. However, since it is considered that the trend of the CPS attack appears in a payload, it is desirable to count matching of payloads (see Non Patent Literature 1).

Citation List

Non Patent Literature

Non Patent Literature 1: "Modbus Protocol Overview", [online], M-System Co., Ltd., [searched on April 26, 2021], Internet <URL: https://www.m-system.co.jp/mssjapanese/kaisetsu/nmmodbus.pdf>

Patent Literature

US 2021141897 A1 refers to receiving a request to determine whether a computer object contains malicious content. This includes extracting a plurality of features from the computer object, generating, based at least in part on the plurality of features via a deep learning model, a similarity score between the computer object and each computer object of a plurality of computer objects that are known to contain malicious content.
CN 112860484 A refers to abnormal behaviour detection and model training during container operation. BERT is described in connection with extracting system call sequence information and container attribute information as model input data.

Summary of Invention

Technical Problem

However, conventionally, it is difficult to search a large number of alerts for an alert that is more similar to matching of payloads. For example, there is a place or the like in a payload where serial numbers increase without meaning, and thus it is difficult to perform search with perfect matching.
The present invention has been made in view of the above, and an object of the present invention is to make it possible to search a large number of alerts for an alert that is more similar to matching of payloads.

Solution to Problem

The above problem is solved and the object achieved by the subject matter of the independent claims. Advantageous embodiments are disclosed in the dependent claims. An estimation device according to an example includes an extraction unit configured to extract a fixed-length feature amount from a payload of communication data, a calculation unit configured to calculate a similarity between feature amounts of abnormal communication data, and a determination unit configured to determine that events are of a same type when the calculated similarity is greater than a predetermined threshold.

Advantageous Effects of Invention

According to the present invention, it is possible to search a large number of alerts for an alert that is more similar to matching of payloads.

Brief Description of Drawings

Fig. 1 is a schematic diagram illustrating a schematic configuration of an estimation device.
Fig. 2 is a flowchart illustrating a detection processing procedure.
Fig. 3 is a flowchart illustrating a search processing procedure.
Fig. 4 is a diagram for explaining an example.
Fig. 5 is a diagram illustrating a computer that executes an estimation program.

Description of Embodiments

Hereinafter, an embodiment of the present invention will be described in detail with reference to the drawings. Note that the present invention is not limited by this embodiment. In addition, the same portions are denoted by the same reference signs in the description of the drawings.

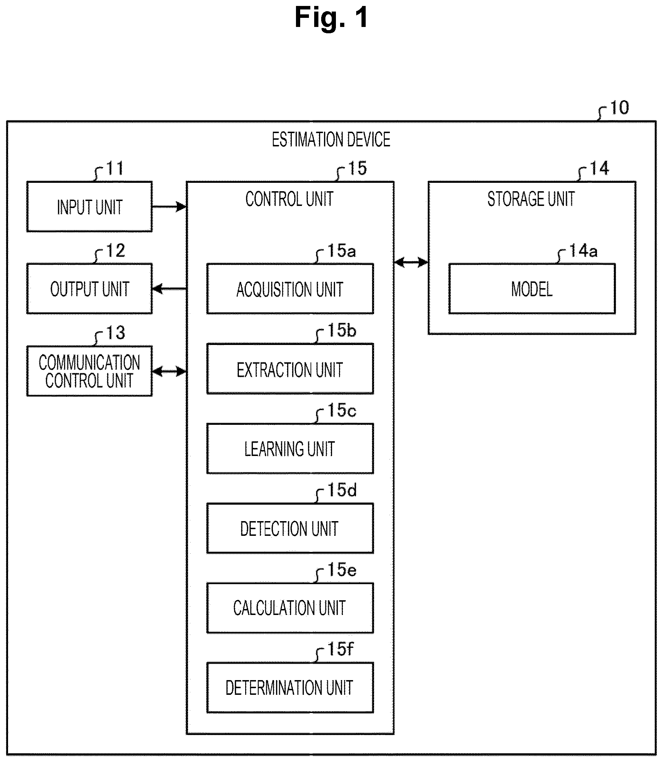

[Configuration of Estimation Device] Fig. 1 is a schematic diagram illustrating a schematic configuration of an estimation device. As illustrated in Fig. 1, an estimation device 10 is realized by a general-purpose computer such as a personal computer, and includes an input unit 11, an output unit 12, a communication control unit 13, a storage unit 14, and a control unit 15.

The input unit 11 is implemented with an input device such as a keyboard or a mouse and inputs various types of instruction information such as processing start to the control unit 15 in response to an input operation of an operator. The output unit 12 is implemented with a display device such as a liquid crystal display, a printing device such as a printer, or the like.

The communication control unit 13 is implemented with a network interface card (NIC) or the like and controls communication between an external device such as a server and the control unit 15 via a network. For example, the communication control unit 13 controls communication between the control unit 15 and a management device or the like that manages communication data to be subjected to estimation processing described below.

The storage unit 14 is realized by a semiconductor memory element such as a random access memory (RAM) or a flash memory or a storage device such as a hard disk or an optical disk, and stores parameters and the like of a model 14a learned by a learning unit 15c to be described later. Note that the storage unit 14 may be configured to establish communication with the control unit 15 via the communication control unit 13.

The control unit 15 is implemented with a central processing unit (CPU) or the like and executes a processing program stored in a memory. As a result, as illustrated in Fig. 1, the control unit 15 functions as an acquisition unit 15a, an extraction unit 15b, the learning unit 15c, a detection unit 15d, a calculation unit 15e, and a determination unit 15f. Note that each or some of these functional units may be mounted on different hardware. For example, the learning unit 15c may be mounted on a device different from a device on which the other functional units are mounted. Alternatively, the learning unit 15c and the detection unit 15d may be mounted on a device different from a device on which the other functional units are mounted. Further, the control unit 15 may include other functional units.

The acquisition unit 15a acquires communication data. For example, the acquisition unit 15a acquires communication data to be used for estimation processing that will be described later via the input unit 11 or the communication control unit 13. In addition, the acquisition unit 15a may store the acquired communication data in the storage unit 14. Note that the acquisition unit 15a may transfer such information to the extraction unit 15b instead of storing the information in the storage unit 14.

The extraction unit 15b extracts a fixed-length feature amount from a payload of the communication data. Specifically, the extraction unit 15b extracts a fixed-length feature amount by converting a payload into a fixed-length feature vector by Bidirectional Encoder Representations from Transformers (BERT).

Here, in general, in BERT, variable-length series data in a natural language is converted into a fixed-length feature vector z as expressed by the following formula (1).

[Math. 1]

$$z_{nth} = \text{BERT}\left(x_{ntd}\right) \qquad \cdots(1)$$

Input data x is a tensor including a data index n, a time index t, and a word index d. In the natural language, the data index n is the number of sentences, the time index t is the number of characters, and the word index d is a word type. In the above formula (1), h is an index of a feature vector.

On the other hand, in a case where a payload of network traffic is input data, it is sufficient if the data index n is the number of packets, the time index t is the length of the payload, and the word index d is 256 types of bytes expressed in a two-digit hexadecimal number.

That is, the extraction unit 15b extracts a payload of a packet, performs preprocessing of converting every eight bits into a character of a two-digit hexadecimal number, and then converts the payload into a fixed-length feature vector by BERT.

The learning unit 15c learns the model 14a that determines whether the communication data is normal or abnormal by using the fixed-length feature amount extracted from the payload of the communication data. For example, the learning unit 15c generates the model 14a based on a VAE that determines whether an input packet is normal or abnormal by anomaly-based unsupervised learning.

The detection unit 15d detects abnormal communication data using the model 14a that determines whether the communication data is normal or abnormal by using the fixed-length feature amount extracted from the payload of the communication data. That is, the detection unit 15d detects abnormal communication data by using the learned model 14a. For example, the detection unit 15d uses the learned VAE model 14a to transfer a packet determined to be abnormal to the calculation unit 15e described below via the extraction unit 15b.

The calculation unit 15e calculates a similarity between the feature amounts of the abnormal communication data. For example, the calculation unit 15e calculates a distance between feature vectors as a similarity between converted feature vectors of the abnormal communication data. Here, a cos similarity between the feature vectors corresponds to the distance between the feature vectors, and the higher the cos similarity, the smaller the distance.

In addition, the calculation unit 15e calculates a similarity not between bytes but between packets in order to calculate a similarity of events of packets determined to be abnormal. Therefore, the calculation unit 15e first takes an average so that an index of the payload remains as shown in the following formula (2).

[Math. 2]

$$z'_{nh} = \frac{1}{\text{payload length}} \sum_t z_{nth} \qquad \cdots(2)$$

In addition, the calculation unit 15e measures the similarity between the packets with respect to two feature vectors of two packets by a cos distance illustrated in the following formula (3) or an L2 norm illustrated in the following formula (4).

[Math. 3]

$$D_{\cos} = \frac{z'_{1nh} \cdot z'_{2nh}}{\|z'_{1nh}\| \|z'_{2nh}\|} \qquad \cdots(3)$$

[Math. 4]

$$D_{L2} = \|z'_{1nh} - z'_{2nh}\|_2 \qquad \cdots(4)$$

When the calculated similarity is larger than a predetermined threshold, the determination unit 15f determines that the events are of the same type. For example, in a case where the distance between the feature vectors is less than a predetermined threshold ε, the determination unit 15f determines that the events are of the same type.

As described above, by using a similarity in a latent variable space, the estimation device 10 can search a large number of alerts for an alert that is more similar to matching of payloads, regardless of presence of a place or the like of a payload where serial numbers increase without meaning. Therefore, even in a case where a trace of an attack appears in the payload as in CPS, it is possible to detect a trend of the attack from the large number of alerts.

[Estimation Processing]

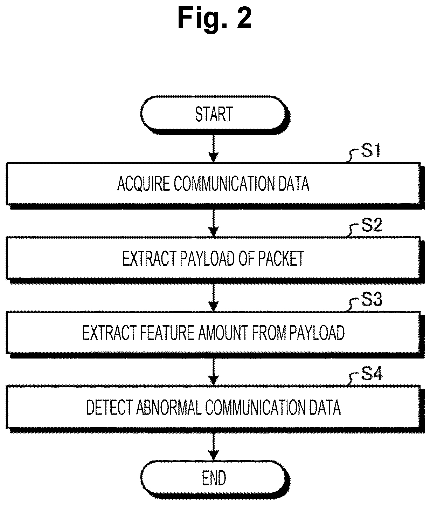

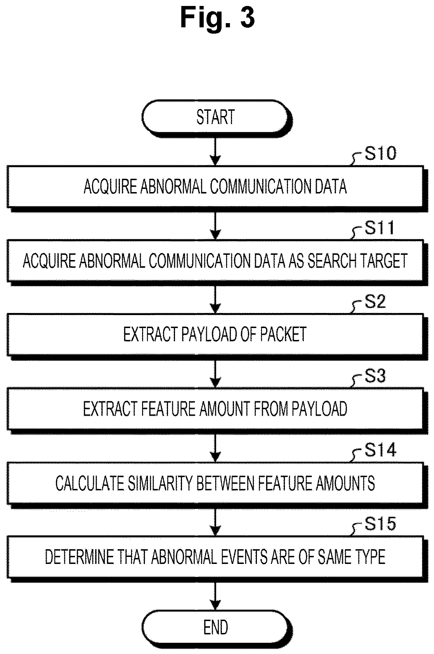

Next, estimation processing performed by the estimation device 10 according to the present embodiment will be described with reference to Figs. 2 and 3. The estimation processing of the present embodiment includes detection processing and search processing. First, Fig. 2 is a flowchart illustrating a detection processing procedure. The flowchart of Fig. 2 is started, for example, at a timing when an operation for instructing a start of the detection processing is input.

First, the acquisition unit 15a acquires communication data (step S1).

Next, the extraction unit 15b extracts a payload of a packet of the acquired communication data (step S2). Furthermore, the extraction unit 15b extracts a fixed-length feature amount from the payload (step S3). For example, the extraction unit 15b extracts a payload of a packet, performs preprocessing of converting every eight bits into a character of a two-digit hexadecimal number, and then converts the payload into a fixed-length feature vector by BERT.

Then, the detection unit 15d detects abnormal communication data by using the learned model 14a (step S4). For example, the detection unit 15d detects abnormal communication data by using the learned VAE model 14a. Thereby, a series of detection processing ends.

Fig. 3 is a flowchart illustrating a search processing procedure. The flowchart of Fig. 3 is started, for example, at a timing when an operation for instructing a start of the search processing is input.

First, the extraction unit 15b acquires communication data detected as abnormal from the detection unit 15d (step S10). The extraction unit 15b may acquire communication data detected as abnormal via the input unit 11 or the communication control unit 13.

Furthermore, the extraction unit 15b acquires abnormal communication data as a search processing target via the input unit 11 or the communication control unit 13 (step S11).

Next, the extraction unit 15b extracts a payload of each packet of the acquired abnormal communication data (step S2). Furthermore, the extraction unit 15b extracts a fixed-length feature amount from each payload (step S3). For example, the extraction unit 15b extracts a payload from each packet, performs preprocessing of converting every eight bits into a character of a two-digit hexadecimal number, and then converts the payload into a fixed-length feature vector by BERT.

Next, the calculation unit 15e calculates a similarity between the feature amounts of the payloads of the abnormal communication data (step S14). For example, the calculation unit 15e calculates a distance between feature vectors as a similarity between converted feature vectors of the abnormal communication data.

Then, when the calculated similarity is larger than a predetermined threshold, the determination unit 15f determines that abnormal events are of the same type (step S15). For example, in a case where the distance between the feature vectors is less than a predetermined threshold, the determination unit 15f determines that abnormal events are of the same type. Thereby, a series of search processing ends.

[Effects]

As described above, the extraction unit 15b extracts the fixed-length feature amount from the payload of the communication data. In addition, the calculation unit 15e calculates the similarity between the feature amounts of the abnormal communication data. Further, when the calculated similarity is larger than the predetermined threshold, the determination unit 15f determines that the events are of the same type.

Specifically, the extraction unit 15b extracts the fixed-length feature amount by converting the payload into the fixed-length feature vector by BERT, the calculation unit 15e calculates the distance between the feature vectors as the similarity between the converted feature vectors of the abnormal communication data, and the determination unit 15f determines that the events are of the same type in a case where the distance between the feature vectors is less than the predetermined threshold.

As described above, by using a similarity in a latent variable space, the estimation device 10 can search a large number of alerts for an alert that is more similar to matching of payloads, regardless of presence of a place or the like of a payload where serial numbers increase without meaning. Therefore, even in a case where a trace of an attack appears in the payload as in CPS, it is possible to detect a trend of the attack from the large number of alerts.

Further, the detection unit 15d detects the abnormal communication data using the model 14a that determines whether the communication data is normal or abnormal by using the fixed-length feature amount extracted from the payload of the communication data. As a result, the estimation device 10 can easily detect the trend of the attack from the large number of alerts.

In addition, the learning unit 15c learns the model 14a by using the fixed-length feature amount extracted from the payload of the communication data. This makes it possible to detect unknown new attacks that appear one after another.

[Examples]

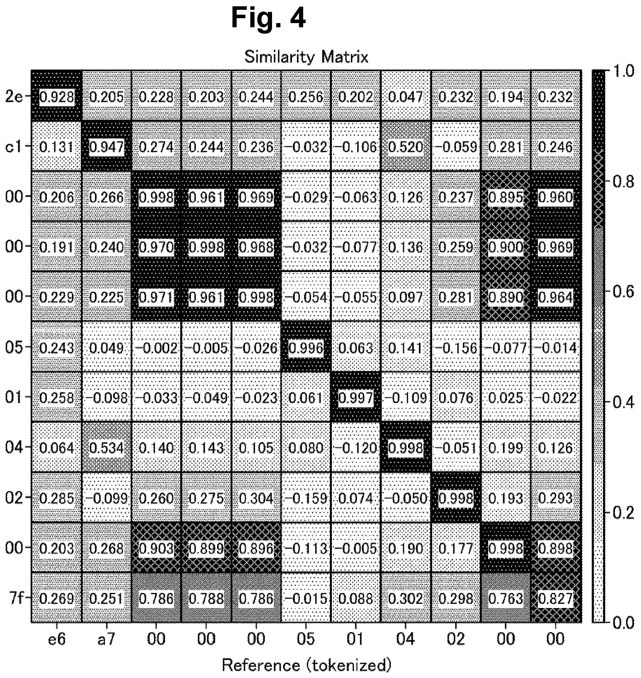

Fig. 4 is a diagram for explaining an example. In the present example, a similarity between feature amounts was calculated as illustrated in Fig. 4 by the estimation processing of the above embodiment for two abnormal packets, that is, an abnormal packet 1 and an abnormal packet 2 described below.

abnormal packet 1: "2e c1 00 00 00 05 01 04 02 00 7f"
abnormal packet 2: "e6 e7 00 00 00 05 01 04 02 00 00"

"2e c1" at the head of the abnormal packet 1 and "e6 e7" at the head of the abnormal packet 2 are portions of serial numbers. In addition, "7f" at the end of the abnormal packet 1 and "00" at the end of the abnormal packet 2 are portions that essentially distinguish abnormality. Then, Fig. 4 illustrates a cos similarity between feature vectors by BERT for each byte of each packet.

When attention is paid to diagonal components in Fig. 4, similarities corresponding to the portions of the first two serial numbers are 0.928 and 0.924. On the other hand, a similarity corresponding to the portion distinguishing the abnormality is 0.827, and the similarities of the portions of the serial numbers have higher values. As described above, it was confirmed that the feature vector according to BERT can relatively ignore the portions of the serial numbers.

[Program]

It is also possible to produce a program that describes the processing executed by the estimation device 10 according to the above embodiment in a computer executable language. As an embodiment, the estimation device 10 can be mounted by installing an estimation program executing the foregoing estimation processing as package software or online software on a desired computer. For example, by causing an information processing device to perform the estimation program, the information processing device can be caused to function as the estimation device 10. The information processing device also includes a mobile communication terminal such as a smartphone, a mobile phone, and a personal handyphone system (PHS) and a slate terminal such as a personal digital assistant (PDA). Further, the functions of the estimation device 10 may be mounted on a cloud server.

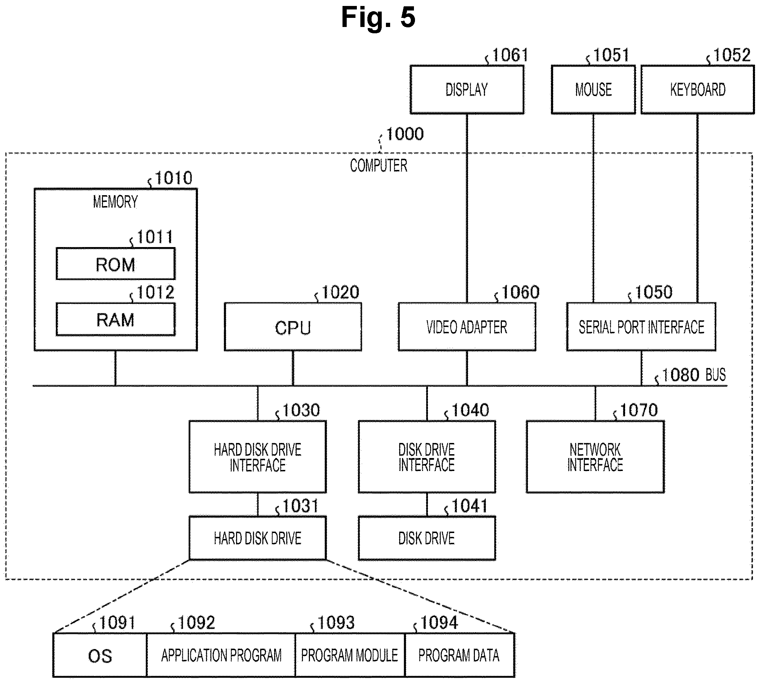

Fig. 5 is a diagram illustrating an example of the computer that executes the estimation program. A computer 1000 includes, for example, a memory 1010, a CPU 1020, a hard disk drive interface 1030, a disk drive interface 1040, a serial port interface 1050, a video adapter 1060, and a network interface 1070. These units are connected to each other by a bus 1080.

The memory 1010 includes a read only memory (ROM) 1011 and a RAM 1012. The ROM 1011 stores, for example, a boot program such as a basic input output system (BIOS). The hard disk drive interface 1030 is connected to a hard disk drive 1031. The disk drive interface 1040 is connected to a disk drive 1041. For example, a removable storage medium such as a magnetic disk or an optical disc is inserted into the disk drive 1041. The serial port interface 1050 is connected to, for example, a mouse 1051 and a keyboard 1052. The video adapter 1060 is connected to, for example, a display 1061.

Here, the hard disk drive 1031 stores, for example, an OS 1091, an application program 1092, a program module 1093, and program data 1094. All of the information described in the above embodiment is stored in the hard disk drive 1031 or the memory 1010, for example.

The estimation program is stored in the hard disk drive 1031 as the program module 1093 in which commands to be executed by the computer 1000, for example, are described. Specifically, the program module 1093 in which each processing executed by the estimation device 10 described in the foregoing embodiment is described is stored in the hard disk drive 1031.

Data used in information processing performed by the estimation program is stored as the program data 1094 in, for example, the hard disk drive 1031. The CPU 1020 reads, into the RAM 1012, the program module 1093 and the program data 1094 stored in the hard disk drive 1031 as necessary and executes each procedure described above.

The program module 1093 and the program data 1094 related to the estimation program are not limited to being stored in the hard disk drive 1031, and may be stored in, for example, a removable storage medium and read by the CPU 1020 via the disk drive 1041 or the like. Alternatively, the program module 1093 and the program data 1094 related to the estimation program may be stored in another computer connected via a network such as a local area network (LAN) or a wide area network (WAN) and may be read by the CPU 1020 via the network interface 1070.

Although the embodiment to which the invention made by the present inventor is applied has been described above, the present invention is not limited by the description and the drawings constituting a part of the disclosure of the present invention according to the present embodiment. In other words, other embodiments, examples, operational technologies, and the like made by those skilled in the art and the like on the basis of the present embodiment are all included in the scope of the present invention.

Reference Signs List

10    Estimation device

11      Input unit
12      Output unit
13      Communication control unit
14      Storage unit
14a     Model
15      Control unit
15a     Acquisition unit
15b     Extraction unit
15c     Learning unit
15d     Detection unit
15e     Calculation unit
15f     Determination unit

that events are of the same type.

**Claims**

1.  An estimation device (10) comprising:

    an extraction unit (15b) configured to extract a fixed-length feature amount from a payload of communication data, wherein the extraction unit (15b) extracts the fixed-length feature amount by converting the payload into a fixed-length feature vector by Bidirectional Encoder Representations from Transformers (BERT) using

    $$z_{nth} = BERT\ (x_{ntd})$$

    wherein x is a tensor including a data index n being the number of packets, time index t is the length of the payload, word index d is 256 types of bytes expressed in a two-digit hexadecimal number and h is the index of a feature vector;
    a calculation unit (15e) configured to calculate a similarity between feature amounts of abnormal communication data, wherein the calculation unit (15e) calculates a distance between feature vectors as a similarity between the converted feature vectors of the abnormal communication data; and
    a determination unit (15f) configured to determine that events are of a same type when the calculated distance between the feature vectors is less than a predetermined threshold.

2.  The estimation device (10) according to claim 1, further including: a detection unit (15d) configured to detect the abnormal communication data by a model that determines whether the communication data is normal or abnormal using the fixed-length feature amount extracted from the payload of the communication data.

3.  The estimation device (10) according to claim 2, further including: a learning unit (15c) configured to learn the model by using the fixed-length feature amount extracted from the payload of the communication data.

4.  An estimation method executed by an estimation device (10), the estimation method comprising:

    an extraction process of extracting a fixed-length feature amount from a payload of communication data, including extracting the fixed-length feature amount by converting the payload into a fixed-length feature vector by Bidirectional Encoder Representations from Transformers (BERT) using

    $$z_{nth} = BERT\ (x_{ntd})$$

    wherein x is a tensor including a data index n being the number of packets, time index t is the length of the payload, word index d is 256 types of bytes expressed in a two-digit hexadecimal number and h is the index of a feature vector;
    a calculation process of calculating a similarity between feature amounts of abnormal communication data, including calculating a distance between feature vectors as a similarity between the converted feature vectors of the abnormal communication data; and
    a determination process of determining that events are of a same type when the calculated distance between the feature vectors is less than a predetermined threshold.

5. An estimation program that causes a computer (1000) to execute:

an extraction step of extracting a fixed-length feature amount from a payload of communication data, including extracting the fixed-length feature amount by converting the payload into a fixed-length feature vector by Bidirectional Encoder Representations from Transformers (BERT) using

$$z_{nth} = BERT\ (x_{ntd})$$

wherein x is a tensor including a data index n being the number of packets, time index t is the length of the payload, word index d is 256 types of bytes expressed in a two-digit hexadecimal number and h is the index of a feature vector;

a calculation step of calculating a similarity between feature amounts of abnormal communication data, including calculating a distance between feature vectors as a similarity between the converted feature vectors of the abnormal communication data; and

a determination step of determining that events are of a same type when the calculated distance between the feature vectors is less than a predetermined threshold.

**Patentansprüche**

1. Schätzvorrichtung (10), umfassend:

eine Extraktionseinheit (15b), die so ausgebildet ist, dass sie aus einer Nutzlast von Kommunikationsdaten eine Merkmalsmenge fester Länge extrahiert, wobei die Extraktionseinheit (15b) die Merkmalsmenge fester Länge durch Umwandeln der Nutzlast durch bidirektionale Encoder-Darstellungen von Transformern (BERT) in einen Merkmalsvektor fester Länge extrahiert, unter Verwendung von

$$Z_{n.} = BERT\ (X_{ntd}),$$

wobei X ein Tensor ist, der einen Datenindex n einschließt, der die Anzahl der Pakete ist, Zeitindex t die Länge der Nutzlast ist, Wortindex d 256 Arten von Bytes ist, die in einer zweistelligen Hexadezimalzahl ausgedrückt sind, und h der Index eines Merkmalsvektors ist;

eine Berechnungseinheit (15e), die so ausgebildet ist, dass sie eine Ähnlichkeit zwischen Merkmalsmengen von anormalen Kommunikationsdaten berechnet, wobei die Berechnungseinheit (15e) einen Abstand zwischen Merkmalsvektoren als eine Ähnlichkeit zwischen den konvertierten Merkmalsvektoren von anormalen Kommunikationsdaten berechnet; und

eine Bestimmungseinheit (15f), die so ausgebildet ist, dass sie bestimmt, dass Ereignisse von demselben Typ sind, wenn der berechnete Abstand zwischen den Merkmalsvektoren kleiner als ein vorbestimmter Schwellenwert ist.

2. Schätzvorrichtung (10) nach Anspruch 1, weiter einschließend: eine Erkennungseinheit (15d), die so ausgebildet ist, dass sie anormale Kommunikationsdaten durch ein Modell erkennt, das bestimmt, ob die Kommunikationsdaten normal oder anormal sind, unter Verwendung der aus der Nutzlast von Kommunikationsdaten extrahierten Merkmalsmenge fester Länge.

3. Schätzvorrichtung (10) nach Anspruch 2, weiter einschließend: eine Lerneinheit (15c), die so ausgebildet ist, dass sie das Modell durch Verwenden der aus der Nutzlast von Kommunikationsdaten extrahierten Merkmalsmenge fester Länge lehrt.

4. Schätzverfahren, das durch eine Schätzvorrichtung (10) ausgeführt wird, wobei das Schätzverfahren Folgendes umfasst:

einen Extraktionsprozess des Extrahierens einer Merkmalsmenge fester Länge aus einer Nutzlast von Kommunikationsdaten, einschließend Extrahieren der Merkmalsmenge fester Länge durch Umwandeln der Nutzlast durch bidirektionale Encoder-Darstellungen von Transformern (BERT) in einen Merkmalsvektor fester Länge, unter Verwendung von

$$Z_{n.} = BERT\ (X_{ntd}),$$

wobei X ein Tensor ist, der einen Datenindex n einschließt, der die Anzahl der Pakete ist, Zeitindex t die Länge der Nutzlast ist, Wortindex d 256 Arten von Bytes ist, die in einer zweistelligen Hexadezimalzahl ausgedrückt sind, und h der Index eines Merkmalsvektors ist;
einen Berechnungsschritt des Berechnens einer Ähnlichkeit zwischen Merkmalsmengen von anormalen Kommunikationsdaten, der Berechnen eines Abstandes zwischen Merkmalsvektoren als eine Ähnlichkeit zwischen den konvertierten Merkmalsvektoren von anormalen Kommunikationsdaten einschließt; und
einen Bestimmungsprozess des Bestimmens, dass Ereignisse von demselben Typ sind, wenn der berechnete Abstand zwischen den Merkmalsvektoren kleiner als ein vorbestimmter Schwellenwert ist.

5. Schätzprogramm, das bewirkt, dass ein Computer (1000) Folgendes ausführt:

einen Extraktionsschritt des Extrahierens einer Merkmalsmenge fester Länge aus einer Nutzlast von Kommunikationsdaten, einschließen Extrahieren der Merkmalsmenge fester Länge durch Umwandeln der Nutzlast durch bidirektionale Encoder-Darstellungen von Transformern (BERT) in einen Merkmalsvektor fester Länge, unter Verwendung von

$$Z_{n.} = BERT\ (X_{ntd}),$$

wobei X ein Tensor ist, der einen Datenindex n einschließt, der die Anzahl der Pakete ist, Zeitindex t die Länge der Nutzlast ist, Wortindex d 256 Arten von Bytes ist, die in einer zweistelligen Hexadezimalzahl ausgedrückt sind, und h der Index eines Merkmalsvektors ist;
einen Berechnungsschritt des Berechnens einer Ähnlichkeit zwischen Merkmalsmengen von anormalen Kommunikationsdaten, der Berechnen eines Abstandes zwischen Merkmalsvektoren als eine Ähnlichkeit zwischen den konvertierten Merkmalsvektoren von anormalen Kommunikationsdaten einschließt; und
einen Bestimmungsprozess des Bestimmens, dass Ereignisse von demselben Typ sind, wenn der berechnete Abstand zwischen den Merkmalsvektoren kleiner als ein vorbestimmter Schwellenwert ist.

**Revendications**

1. Dispositif d'estimation (10) comprenant :

une unité d'extraction (15b), configurée pour extraire d'une charge utile de données de communication une quantité de caractéristiques de longueur fixe,

dans lequel l'unité d'extraction (15b) extrait la quantité de caractéristiques de longueur fixe par conversion de la charge utile en un vecteur de caractéristiques de longueur fixe par Bidirectional Encoder Representations from Transformers (BERT) en utilisant

$$z_{nth} = BERT\ (X_{ntd})$$

dans laquelle X est un tenseur incluant un indice de données n qui est le nombre de paquets, un indice temporel t est la longueur de la charge utile, un indice de mot d est 256 types d'octets exprimés sous forme de nombre hexadécimal à deux chiffres, et h est l'indice de vecteur de caractéristiques ;

une unité de calcul (15e), configurée pour calculer une similarité entre des quantités de caractéristiques de données de communication anormales, dans lequel l'unité de calcul (15e) calcule une distance entre des vecteurs de caractéristiques comme étant une similarité entre les vecteurs de caractéristiques convertis des données de communication anormales ; et
une unité de détermination (15f), configurée pour déterminer que des événements sont d'un même type lorsque la distance calculée entre les vecteurs de caractéristiques est inférieure à un seuil prédéterminé.

2. Dispositif d'estimation (10) selon la revendication 1, incluant en outre : une unité de détection (15d), configurée pour détecter les données de communication anormales par un modèle qui détermine si les données de communication sont normales ou anormales en utilisant la quantité de caractéristiques de longueur fixe extraite de la charge utile des données de communication.

3. Dispositif d'estimation (10) selon la revendication 2, incluant en outre : une unité d'apprentissage (15c), configurée pour réaliser l'apprentissage du modèle en utilisant la quantité de caractéristiques de longueur fixe extraite de la charge utile des données de communication.

4. Procédé d'estimation mis en œuvre par un dispositif d'estimation (10), le procédé d'estimation comprenant :

un procédé d'extraction, consistant à extraire d'une charge utile de données de communication une quantité de caractéristiques de longueur fixe, incluant le fait d'extraire la quantité de caractéristiques de longueur fixe par conversion de la charge utile en un vecteur de caractéristiques de longueur fixe par Bidirectional Encoder Representations from Transformers (BERT), en utilisant

$$z_{nth} = \text{BERT}(X_{ntd})$$

dans laquelle X est un tenseur incluant un indice de données n qui est le nombre de paquets, un indice temporel t est la longueur de la charge utile, un indice de mot d est 256 types d'octets exprimés sous forme de nombre hexadécimal à deux chiffres, et h est l'indice de vecteur de caractéristiques ;
un procédé de calcul, consistant à calculer une similarité entre des quantités de caractéristiques de données de communication anormales, incluant le calcul d'une distance entre des vecteurs de caractéristiques comme étant une similarité entre les vecteurs de caractéristiques convertis des données de communication anormales ; et
un procédé de détermination, consistant à déterminer que des événements sont d'un même type lorsque la distance calculée entre les vecteurs de caractéristiques est inférieure à un seuil prédéterminé.

5. Programme d'estimation qui amène un ordinateur (1000) à mettre en œuvre :

une étape d'extraction, consistant à extraire d'une charge utile de données de communication une quantité de caractéristiques de longueur fixe, incluant le fait d'extraire la quantité de caractéristiques de longueur fixe par conversion de la charge utile en un vecteur de caractéristiques de longueur fixe par Bidirectional Encoder Representations from Transformers (BERT) en utilisant

$$z_{nth} = \text{BERT}(X_{ntd})$$

dans laquelle X est un tenseur incluant un indice de données n qui est le nombre de paquets, un indice temporel t est la longueur de la charge utile, un indice de mot d est 256 types d'octets exprimés sous forme de nombre hexadécimal à deux chiffres et h est l'indice de vecteur de caractéristiques ;
une étape de calcul, consistant à calculer une similarité entre des quantités de caractéristiques de données de communication anormales, incluant le calcul d'une distance entre des vecteurs de caractéristiques comme étant une similarité entre les vecteurs de caractéristiques convertis des données de communication anormales ; et
une étape de détermination, consistant à déterminer que des événements sont d'un même type lorsque la distance calculée entre les vecteurs de caractéristiques est inférieure à un seuil prédéterminé.

# Fig. 1

ESTIMATION DEVICE ⌐10

INPUT UNIT ⌐11

OUTPUT UNIT ⌐12

COMMUNICATION CONTROL UNIT ⌐13

CONTROL UNIT ⌐15

ACQUISITION UNIT ⌐15a

EXTRACTION UNIT ⌐15b

LEARNING UNIT ⌐15c

DETECTION UNIT ⌐15d

CALCULATION UNIT ⌐15e

DETERMINATION UNIT ⌐15f

STORAGE UNIT ⌐14

MODEL ⌐14a

# Fig. 2

```
                        ┌─────────────┐
                        │    START    │
                        └──────┬──────┘
                               │            ⌐S1
        ┌──────────────────────▼──────────────────────┐
        │        ACQUIRE COMMUNICATION DATA            │
        └──────────────────────┬──────────────────────┘
                               │            ⌐S2
        ┌──────────────────────▼──────────────────────┐
        │          EXTRACT PAYLOAD OF PACKET           │
        └──────────────────────┬──────────────────────┘
                               │            ⌐S3
        ┌──────────────────────▼──────────────────────┐
        │      EXTRACT FEATURE AMOUNT FROM PAYLOAD     │
        └──────────────────────┬──────────────────────┘
                               │            ⌐S4
        ┌──────────────────────▼──────────────────────┐
        │       DETECT ABNORMAL COMMUNICATION DATA     │
        └──────────────────────┬──────────────────────┘
                               │
                        ┌──────▼──────┐
                        │     END     │
                        └─────────────┘
```

# Fig. 3

```
                    ┌──────────────┐
                    │    START     │
                    └──────┬───────┘
                           │              ┌S10
           ┌───────────────▼──────────────────────┐
           │   ACQUIRE ABNORMAL COMMUNICATION DATA │
           └───────────────┬──────────────────────┘
                           │              ┌S11
           ┌───────────────▼──────────────────────────────┐
           │ ACQUIRE ABNORMAL COMMUNICATION DATA AS SEARCH TARGET │
           └───────────────┬──────────────────────────────┘
                           │              ┌S2
           ┌───────────────▼──────────────────────┐
           │        EXTRACT PAYLOAD OF PACKET      │
           └───────────────┬──────────────────────┘
                           │              ┌S3
           ┌───────────────▼──────────────────────┐
           │    EXTRACT FEATURE AMOUNT FROM PAYLOAD │
           └───────────────┬──────────────────────┘
                           │              ┌S14
           ┌───────────────▼──────────────────────┐
           │ CALCULATE SIMILARITY BETWEEN FEATURE AMOUNTS │
           └───────────────┬──────────────────────┘
                           │              ┌S15
           ┌───────────────▼──────────────────────┐
           │ DETERMINE THAT ABNORMAL EVENTS ARE OF SAME TYPE │
           └───────────────┬──────────────────────┘
                           │
                    ┌──────▼───────┐
                    │     END      │
                    └──────────────┘
```

# Fig. 4

## Similarity Matrix

EP 4 332 801 B1

# Fig. 5

REFERENCES CITED IN THE DESCRIPTION

**Patent documents cited in the description**

- US 2021141897 A1

- CN 112860484 A

**Non-patent literature cited in the description**

- Modbus Protocol Overview. M-System Co., 26 April 2021